# EUROPÄISCHE PATENTSCHRIFT

(11) **EP 1 664 489 B1**
(45) Veröffentlichungstag und Bekanntmachung des Hinweises auf die Patenterteilung: **11.07.2007**
(21) Anmeldenummer: 04764907.4
(22) Anmeldetag: 07.09.2004
(51) Int. Cl.: F01D 11/00, F16J 15/08

(54) **GASTURBINE MIT EINEM RINGFÖRMIGEN DICHTUNGSMITTEL**
GAS TURBINE COMPRISING A RING-SHAPED SEALING MEANS
TURBINE A GAZ COMPRENANT DES MOYENS D'ETANCHEITE CIRCULAIRES

(30) Priorität: 11.09.2003 EP 03020720
(43) Veröffentlichungstag der Anmeldung: 07.06.2006
(73) Patentinhaber: SIEMENS AKTIENGESELLSCHAFT, 80333 München (DE)
(72) Erfinder: MILAZAR, Mirko, 46049 Oberhausen (DE)
(86) Internationale Anmeldenummer: PCT/EP2004/009964
(87) Internationale Veröffentlichungsnummer: WO 2005/026502

(56) Entgegenhaltungen:
- EP-A- 1 118 806
- EP-A- 1 323 891
- US-A- 1 073 916
- US-A- 4 300 868
- US-A- 5 049 032
- US-A- 5 221 096
- US-B1- 6 464 232

## Beschreibung

Die Erfindung betrifft eine Gasturbine mit einem drehfesten konzentrisch zum Rotor angeordneten Innengehäuse gemäß dem Oberbegriff des Anspruchs 1.

Eine solche Gasturbine ist aus der EP 1 118 806 A1 bekannt. Zum Abdichten eines von zwei teilweise überlappenden Wandsegmenten begrenzten Spaltes ist ein frei auskragender Biegeansatz vorgesehen. Unter Temperatureinwirkung, biegt der Biegeansatz sich derart, dass dieser den Spalt schließt.

Aus der EP 896 128 ist ein Dichtelement für eine Gasturbine bekannt. Die Gasturbine weist einen Leitschaufelring aus benachbarten Turbinenleitschaufeln auf, die einen ringförmigen Heißgaskanal bilden. Zur inneren und äußeren Begrenzung des Heißgaskanals sind an den Turbinenschaufeln Plattformen angeordnet. Unmittelbar benachbarte Plattformen bilden mit ihren aneinander liegenden Stirnseiten einen Spalt, der mittels eines Dichtelements abgedichtet ist. In jeder Stirnseite ist dazu jeweils eine Nut eingebracht, die einander gegenüberliegen und in die das Dichtelement eingesetzt wird. Das im Querschnitt C-förmige Dichtelement ragt jeweils mit einem der beiden gebogenen Enden derart in eine Nut hinein, dass die beiden sich quer zum Nutgrund erstreckenden Arme des Dichtelements an jeweils einer Flanke der Nut anliegen und so den Spalt zwischen den zwei benachbarten Plattformen abdichten. Das im Heißgaskanal strömende Arbeitsfluid wird so am Verlassen des Kanals durch den Spalt gehindert.

Weiter ist aus der DE 100 44 848 ein Dichtelement bekannt, welches einen zwischen zwei statischen Turbinenteilen geformten Spalt abdichtet. Das Dichtelement ist ebenfalls in zwei sich gegenüberliegenden Nuten eingesetzt, jedoch weist es im Gegensatz zu der EP 896 128 eine andere Geometrie auf.

Die Wirkung und Funktion dieses Dichtelements ist zu dem vorgenannten Dichtelement identisch.

Beim Betrieb der Gasturbine treten an den heißgasbeaufschlagten Komponenten, wie den Leitschaufeln und deren Plattformen, thermische Dehnungen auf, die zu einer Verschiebung der Komponenten gegeneinander führen können.

Die bekannten Dichtelemente ermöglichen bei einer zum Spalt parallel gerichteten Scherverschiebung nur einen relativ kleinen Verschiebeweg.

Die Aufgabe der Erfindung ist es daher, eine Gasturbine mit einem Dichtmittel anzugeben, welches auch bei größeren Verschiebewegen wirksam ist.

Die Aufgabe wird durch die Merkmale des Anspruchs 1 gelöst.

Die Lösung der Aufgabe schlägt vor, dass das Dichtungsmittel als Federelement mit einem ersten Ende, mit einem zweiten Ende und mit einem dazwischen liegenden Federbereich ausgebildet ist und dass das erste Ende in einem der beiden Ringe in einer zum Ringspalt hin geöffneten Umfangsnut festgelegt ist und dass der am anderen der beiden Ringe angeordnete Kragen eine Anlageringfläche für das zweite Ende des Federelements aufweist, an der das Federelement den Ringspalt abdichtend vorgespannt anliegt, wobei zur Erzeugung der Vorspannung der Federbereich sich an einer Abstützringfläche abstützt, welche an dem Kragen des einen Ringes vorgesehen und der Anlageringfläche zugewandt ist.

Beim Betrieb der Gasturbine bewegen sich aufgrund von Wärmedehnungen die beiden Ringe relativ zueinander. Diese Bewegungen sind parallel zur Anlageringfläche, senkrecht dazu oder eine Mischung aus den beiden Bewegungen. Dabei bedingt die Federvorspannung das selbsttätige Nachführen des Federelements an der Anlageringfläche, ohne dass das Federelement den Kontakt zur Anlageringfläche und so das Federelement die Dichtwirkung verliert. Es verschiebt sich lediglich die Kontaktlinie in axialer Richtung entlang der Anlageringfläche.

Zur Erzeugung der Federvorspannung nutzt das Federelement als Widerlager eine Abstützringfläche, die an der dem Heißgaskanal zugewandten Innenseite des außen liegenden Kragens angeordnet ist. Dabei liegt das Federelement zumindest teilweise zwischen seinen beiden Enden am Widerlager an. Die Dichtwirkung kann aufrechterhalten werden, da durch das Abstützen des Federelementes das freie bzw. zweite Ende besonders großen radialen Verschiebungen folgen kann, d.h. auch wenn das Spaltmaß sich wesentlich vergrößert bleibt die Dichtwirkung aufrecht erhalten.

Aufgrund der im Querschnitt länglichen Ausgestaltung des Federelements ist eine größere Scherverschiebung, d. h. bezogen auf den Rotor in Radialrichtung, der beiden Komponenten zueinander möglich.

Vorteilhafte Ausgestaltungen sind in den Unteransprüchen angegeben.

Zweckmäßigerweise ist das Innengehäuse konisch zum Rotor in Strömungsrichtung divergierend ausgebildet.

Eine einfache Überlappung der an den benachbarten Ringen angeordneten, sich in Divergenzrichtung erstreckenden Kragen ist gegeben, wenn der in Strömungsrichtung gesehen vordere Ring den radial innen liegenden und der hintere Ring den außen liegenden Kragen auf, so dass der Ringspalt radial gesehen gegen die Strömungsrichtung des Arbeitsfluids verläuft. Diese Anordnung erschwert das tiefere Einströmen des Heißgases in den abzudichtenden Spalt, da das Heißgas beim Eindringen durch die durch eine Biegung im rechten Winkel erzwungene Strömungsrichtungsumkehrung an kinetischer Energie verliert. Das Federelement wird so vom Heißgas lediglich mit einer geringeren radial nach außen gerichteten Kraft als der Federvorspannung beaufschlagt.

Dazu ist das feste Ende des Federelements in einer an der Stirnseite des hinteren Rings vorgesehenen Umfangsnut als Festlager eingebracht und kann durch Schweißen oder Löten gasdicht mit dem hinteren Ring verbunden werden. Bei Bewegungen bewegt sich das Federelement somit immer synchron mit dem hinteren Ring mit.

In einer weiteren Ausgestaltung ist die Anlageringfläche an der dem Arbeitsfluid abgewandten Seite des radial inneren Kragens und somit am vorderen Ring vorgesehen. Das im Querschnitt S-förmige Federelement kann dann als Freilager mit seinem freien Ende an der Anlageringfläche dicht anliegen.

Besonders vorteilhaft ist die Ausgestaltung, bei der außerhalb des Innengehäuses ein Kühlmedium strömbar ist, dessen Druck größer ist als der Druck des Arbeitsfluids im Inneren des Innengehäuses und bei der die Federwirkung des Dichtmittels in Richtung des Druckgefälles verläuft. Dadurch wird die Federwirkung des Federelements durch das nicht zu vernachlässigende Druckgefälle zwischen Kühlmedium und Arbeitsfluid unterstützt. Die so erzeugte zusätzliche Anpresskraft ist von der Fläche des Federelementes, an der das Kühlmedium wirken kann, abhängig und wird mit steigendem Druckunterschied größer. Die zusätzliche Anpresskraft führt zu einer verbesserten Dichtwirkung. Selbst für den Fall, dass die Federvorspannung nachlässt, ist so eine zuverlässige Anlage des freien Endes des Federelements an der Anlageringfläche im Betrieb gewährleistet.

Die Erfindung wird anhand von Zeichnungen erläutert. Dabei zeigen:
- FIG. 1: einen Ringspalt mit einem Dichtungsmittel,
- FIG. 2: einen Längsteilschnitt durch eine Gasturbine und
- FIG. 3: den Ringspalt gemäß FIG. 1 mit versetzten Ringen.

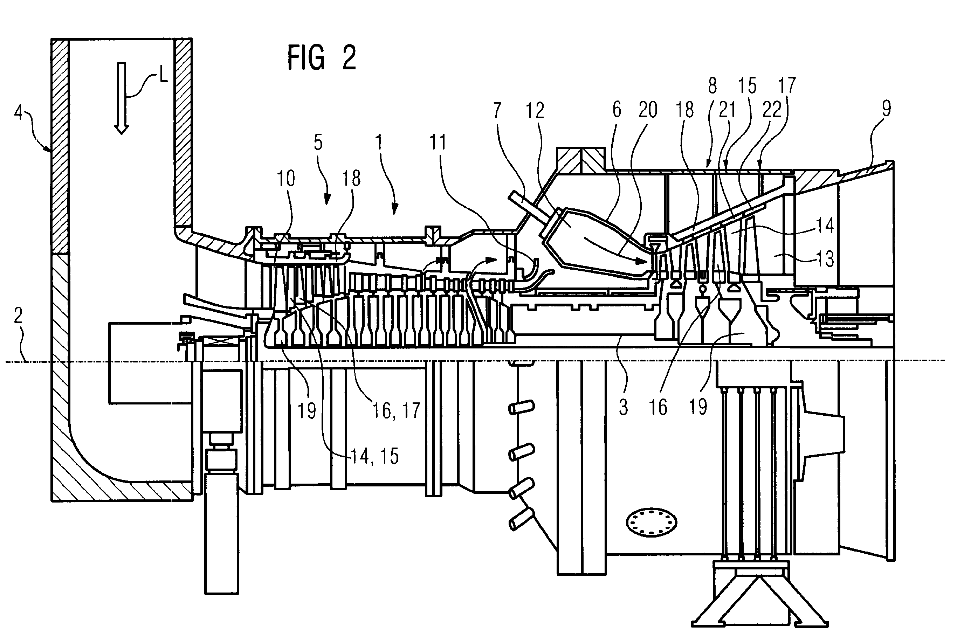

Die FIG.2 zeigt eine Gasturbine 1 in einem Längsteilschnitt. Sie weist im Inneren einen um eine Drehachse 2 drehgelagerten Rotor 3 auf, der auch als Turbinenläufer oder Rotorwelle bezeichnet wird. Entlang des Rotors 3 folgen ein Ansauggehäuse 4, ein Verdichter 5, eine torusartige Ringbrennkammer 6 mit mehreren koaxial angeordneten Brennern 7, eine Turbine 8 und das Abgasgehäuse 9 aufeinander.

Im Verdichter 5 ist ein ringförmiger Verdichterkanal 10 vor gesehen, der sich in Richtung der Ringbrennkammer 6 im Querschnitt verjüngt. Am brennkammerseitigen Ausgang des Verdichters 5 ist ein Diffusor 11 angeordnet, der mit der Ringbrennkammer 6 in Strömungsverbindung steht. Die Ringbrennkammer 6 bildet einen Verbrennungsraum 12 für ein Gemisch aus einem Brennmittel und verdichteter Luft. Ein Heißgaskanal 13 ist mit dem Verbrennungsraum 12 in Strömungsverbindung, wobei dem Heißgaskanal 13 das Abgasgehäuse 9 nachgeordnet ist.

Im Verdichterkanal 10 und im Heißgaskanal 13 sind jeweils alternierend Schaufelringe angeordnet. Es folgt einem aus Leitschaufeln 14 gebildeter Leitschaufelring 15 jeweils ein aus Laufschaufeln 16 gebildeter Laufschaufelring 17. Die feststehenden Leitschaufeln 14 sind dabei mit einem Leitschaufelträger 18 verbunden, wo hingegen die Laufschaufeln 16 am Rotor 3 mittels einer Scheibe 19 verbunden sind.

Die Leitschaufeln 14 sind am Leitschaufelträger 18 befestigt und weisen an ihrem dem Leitschaufelträger 18 zugewandten Ende Plattformen 21 auf, die den Heißgaskanal 13 nach außen hin begrenzen. Zu den Plattformen 21 der Leitschaufeln 14 sind in Strömungsrichtung Führungsringe 22 benachbart angeordnet, die den Spitzen der Laufschaufeln 16 gegenüberliegen und den Heißgaskanal 13 begrenzen. Die Plattformen 21 der einzelnen Leitschaufeln 14 eines Leitschaufelrings 15 bilden dabei einen Ring 25, der dem aus Segmenten bestehenden Führungsring 22 benachbart ist und zwischen denen ein Ringspalt 23 eingeschlossen ist. Der Führungsring 22 und der Plattformring bilden dabei ein Innengehäuse 37 für das durch die Ringe strömende Arbeitsfluid 20.

Während des Betriebes der Gasturbine 1 wird vom Verdichter 5 durch das Ansauggehäuse 4 Luft 21 angesaugt und im Verdichterkanal 10 verdichtet. Eine am brennerseitigen Ende des Verdichters 5 bereitgestellt Luft L wird durch den Diffusor 11 zu den Brennern 7 geführt und dort mit einem Brennmittel vermischt. Das Gemisch wird dann unter Bildung eines Arbeitsfluids 20 im Verbrennungsraum 10 verbrannt. Von dort aus strömt das Arbeitsfluid 20 in den Heißgaskanal 13. An den in der Turbine 8 angeordneten Leitschaufeln 14 und an den Laufschaufeln 16 entspannt sich das Arbeitsfluid 20 impulsübertragend, so dass der Rotor 3 angetrieben wird und mit ihm eine an ihn angekoppelte Arbeitsmaschine (nicht dargestellt).

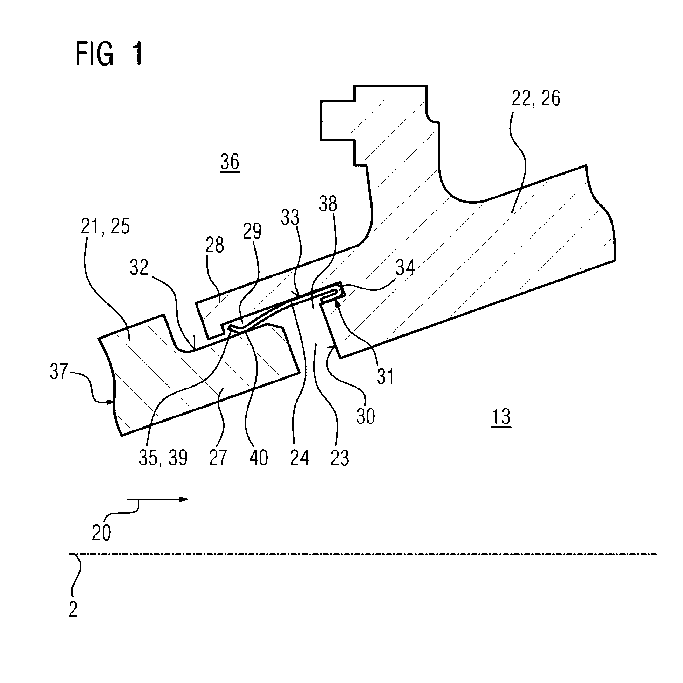

FIG. 1 zeigt einen Ausschnitt aus der Gasturbine 1 mit einem Spalt, beispielsweise einem Ringspalt 23. Der Ringspalt 23 ist dabei zwischen einer ersten Komponente, der Plattform 21 der Leitschaufel 14, und einer zweiten Komponente, dem Führungsring 22, ausgebildet. In FIG. 1 sind nur die für die Erfindung wesentlichen Bauteile dargestellt, d.h. auf die Darstellung von Leitschaufeln 14 und Laufschaufeln 16 sowie auf die Befestigung des Führungsringes 22 und der Plattform 21 wird verzichtet.

In Strömungsrichtung des Arbeitsfluids 20 gesehen bilden die Plattformen 21 den vorderen Ring 25 und der Führungsring 22 den hinteren Ring 26. Am vorderen Ring 25 ist radial innen liegend ein erster Kragen 27 angeformt, der sich in Richtung des nachgeschalteten hinteren Rings 26 entlang des konischen Verlaufs des Heißgaskanals 13 erstreckt. Am hinteren Ring 26 ist radial außen ein weiterer Kragen 28 angeformt, der den ersten Kragen 27 radial von innen nach außen gesehen überlappt, so dass der Ringspalt 23 im Querschnitt als Überlappungsspalt geformt ist. Ein Überlappungsspalt bei der der radial äußere Kragen 28 am vorderen Ring 25 und der innere Kragen 27 am hinteren Ring 26 angeordnet ist, wäre selbstverständlich auch möglich.

Entlang des Ringspalts 23 von innen nach außen betrachtet weist dieser zunächst einen in Radialrichtung verlaufenden Spaltabschnitt auf, der durch den äußeren Kragen 28 in einer Biegung 38 umgelenkt wird, so dass sich daran ein Spaltabschnitt 29 in Axialrichtung anschließt, der sich entgegen der Strömungsrichtung des Arbeitsfluids 20 erstreckt. Danach erfolgt eine zweite Biegung, die den Ringspalt 23 wieder in Radialrichtung umlenkt.

An der dem Arbeitsfluid 20 abgewandten Seite des ersten Kragens 27 ist eine Anlageringfläche 32 angeordnet. Der Anlageringfläche 32 gegenüberliegend befindet sich am äußeren Kragen 28 die Abstützringfläche 33.

In der dem vorderen Ring 25 zugewandten Stirnseite 30 des hinteren Rings 26 ist eine Nut, vorzugsweise eine Umfangsnut 31 vorgesehen.

Das erste Ende 34 des Federelements 24 ist umgebördelt und in die Umfangsnut 31 eingesteckt. Dabei kann die Umfangsnut 31 in ihrer Breite etwas kleiner sein als die doppelte Materialstärke des Federelements 24, um eine gut anliegende und sichere Verbindung mit dem hinteren Ring 26 zu erreichen. Gleichfalls kann das Federelement 24 in der Umfangsnut 31 mit dem hinteren Ring 26 verlötet bzw. verschweißt sein.

An das erste Ende 34 des Federelementes 24 schließt sich im Querschnitt in einen leicht konvexen Bogen verlaufender Federbereich an, welcher sich an der Abstützringfläche 33 abstützt. Dadurch wird eine Vorspannung im Federelement 24 erzeugt, die in Richtung der Anlageringfläche 32 gerichtet ist.

An den konvexen Bogen, d. h. an den Federbereich des Federelements 24 schließt sich ein durch einen konkaven Bogen 39 gebildetes freies, zweites Ende 35 an. Um eine gute Verschiebbarkeit des zweites Endes 35 an der Anlageringfläche 32 zu erreichen, liegt der konkave Bogen 39 des Federelements 24 entlang einer in Umfangsrichtung gerichteten Kontaktlinie 40 an der Anlageringfläche 32 luftdicht an.

Ein durch die Ringe 25, 26 vom Heißgaskanal 13 abgetrennter Rückraum 36 wird durch das an den beiden Ringen 25, 26 anliegende ebenfalls als Ring aus Segmenten ausgebildete Federelement 24 vom Heißgaskanal 13 luftdicht getrennt.

Zur Kühlung der mit dem heißen Arbeitsfluid 20 beaufschlagten Ringe 25, 26 oder Ringsegmente strömt im Rückraum 36 ein Kühlfluid, dessen Druck höher ist als der des Arbeitsfluids 20. Die Vorspannung des Federelements 24 wird durch die vom Druckgefälle erzeugte Kraft unterstützt, so dass das Federelement 24 noch stärker an die Anlageringfläche 32 anpresst wird. Eine geringe Kühlfluidausströmung infolge nicht auszuschließender Positionsabweichungen zwischen einzelnen Segmenten eines Ringes oder infolge einer Oberflächenrauhigkeit der Anlageringfläche 32 dient zur Kühlung des Federelements 24.

Das Federelement 24 kann dabei aus einer hitzebeständigen Legierung hergestellt sein, beispielsweise aus einer Legierung mit dem Handelsnamen Nimonic 90.

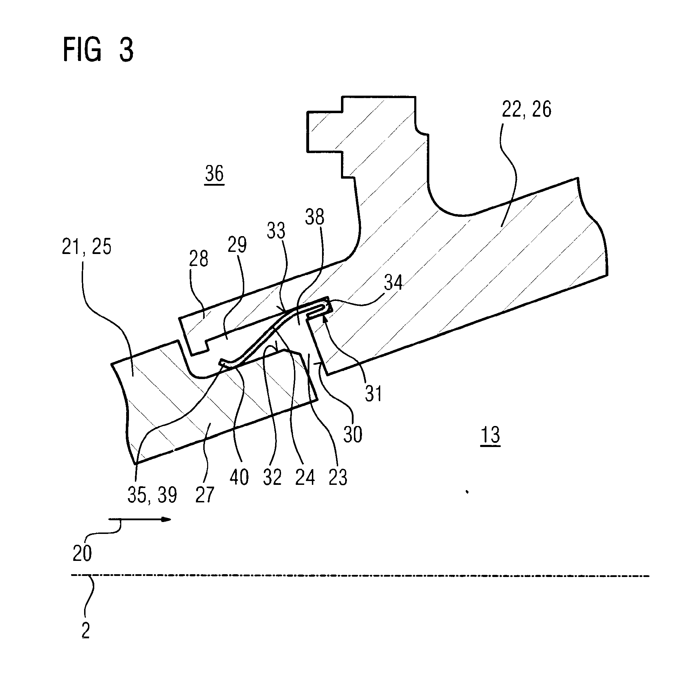

FIG. 3 zeigt die beiden Ringe 25, 26 nach erfolgter thermischer Ausdehnung in einer zueinander verschobenen Position. Bezogen auf FIG. 1 ist die Länge der Spaltabschnitt 29 in Strömungsrichtung des Arbeitsfluids 20 gesehen verkürzt, wobei jedoch der Abstand der beiden Kragen 27, 28 bzw. der Abstand der Anlageringfläche 32 zur Abstützringfläche 33 gegenüber FIG. 1 sich vergrößert hat. Bezogen auf den Rotor 3 sind die beiden den Ringspalt 23 bildenden Ringe 25, 26 sowohl in Radialrichtung als auch in Axialrichtung zueinander verschoben.

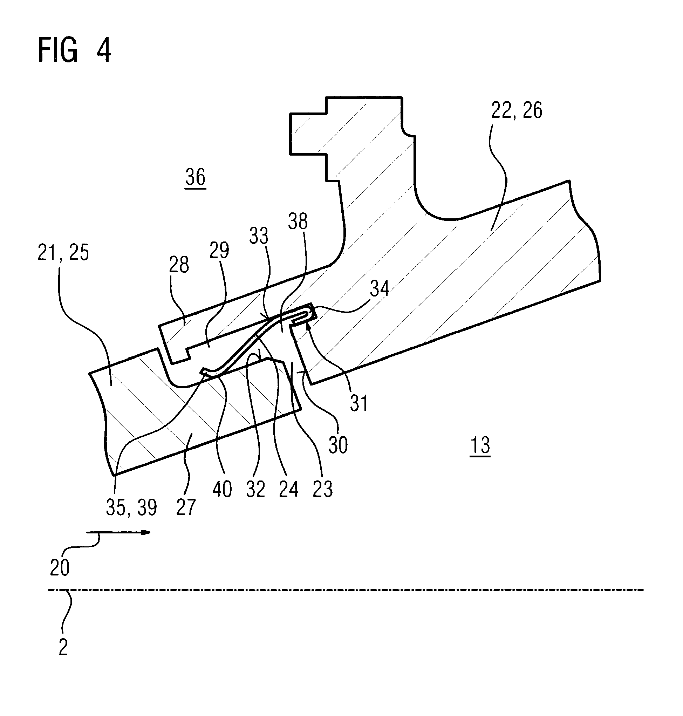

Alternativ zu Fig. 3 zeigt Fig.4 ein durch das Anstemmen der Umfangsnut 31 gelenkartig eingeklemmtes Federelement 24, so dass eine geringe Beweglichkeit des Federelements 24 nach Art eines Scharniers gegeben ist.

Durch die Federvorspannung bleibt das freie Ende 35 des Federelements 24 mit der Anlageringfläche 32 trotz des großen Verschiebeweges in Kontakt und dichtet so den Rückraum 36 gegenüber dem Heißgaspfad 13 ab. Geringe Leckageströme des Kühlfluids durch den Ringspalt 23 in den Heißgaskanal hinein sind dabei möglich, wobei gegenüber dem Stand der Technik weiterhin eine Verbesserung der Dichtwirkung und eine Verminderung der Leckage erzielt wird.

Durch die ringförmige Anordnung der Plattformen 21 und Führungsringe 22 und durch die erforderliche radiale Montage dieser Komponenten sind mit den in der Beschreibung und Ansprüchen beschriebenen Plattformen 21, Leitschaufelringe 15, Ringe 22, 25, 26 als auch Federelemente 24 jeweils nur Segmente des jeweiligen Ringes zu verstehen.

Ferner kann das vorgeschlagene Dichtungsmittel sowohl zwischen benachbarten Plattformen eines einzelnen Schaufelringes als auch in anderen Bereichen der Gasturbine z.B. in der Brennkammer eingesetzt werden, wenn zwischen den abzudichtenden Komponenten ein Überlappungsspalt gebildet ist.

## Patentansprüche

1. Gasturbine (1) mit einem drehfesten konzentrisch zum Rotor (3) angeordneten, von einem Arbeitsmedium durchströmten Innengehäuse (37),
das aus zumindest zwei aneinander gereihten Ringen (25, 26) jeweils unter Belassung eines Ringspaltes (23) zwischen zwei unmittelbar benachbarten Ringen (25, 26) gebildet ist, welche jeweils im Bereich des Ringspaltes (23) einen in Strömungsrichtung des Arbeitsmediums (20) erstreckenden Kragen (27, 28) aufweisen, die einander teilweise überlappen, wobei zur Abdichtung des Ringspaltes (23) ein ringförmiges Dichtungsmittel vorgesehen ist,
**dadurch gekennzeichnet,**
**dass** das Dichtungsmittel als Federelement (24) mit einem ersten Ende (34), mit einem zweiten Ende (35) und mit einem dazwischen liegenden Federbereich ausgebildet ist und
**dass** das erste Ende (34) in einem der beiden Ringe (26) in einer zum Ringspalt (23) hin geöffneten Umfangsnut (31) festgelegt ist und
**dass** der am anderen der beiden Ringe (25) angeordnete Kragen (27) eine Anlageringfläche (32) für das zweite Ende (35) des Federelements (24) aufweist, an der das Federelement (24) den Ringspalt (23) abdichtend vorgespannt anliegt,
wobei zur Erzeugung der Vorspannung der Federbereich sich an einer Abstützringfläche (33) abstützt, welche an dem Kragen (28) des einen Ringes (26) vorgesehen und der Anlageringfläche (40) zugewandt ist.

2. Gasturbine nach Anspruch 1,
**dadurch gekennzeichnet,**
**dass** das Innengehäuse (37) konisch zum Rotor (3) in Strömungsrichtung divergierend ausgebildet ist.

3. Gasturbine nach Anspruch 1 oder 2,
**dadurch gekennzeichnet,**
**dass** der in Strömungsrichtung gesehen vordere Ring (25) den radial innen liegenden Kragen (27) und der hintere Ring (26) den außen liegenden Kragen (28) aufweist, so dass der Ringspalt (23) radial gesehen gegen die Strömungsrichtung des Arbeitsfluids (20) verläuft.

4. Gasturbine nach Anspruch 1, 2 oder 3,
**dadurch gekennzeichnet,**
**dass** das erste Ende (34) als festes Ende des Federelements (24) durch Schweißen oder Löten mit der Umfangsnut (31) dicht verbunden ist.

5. Gasturbine nach einem der Ansprüche 1 bis 4,
**dadurch gekennzeichnet,**
**dass** die Anlageringfläche (32) auf der dem Arbeitmedium abgewandten Seite des radial inneren Kragens (27) vorgesehen ist.

6. Gasturbine nach Anspruch 5,
**dadurch gekennzeichnet,**
**dass** das im Querschnitt S-förmige Federelement (24) mit seinem dem ersten Ende (34) gegenüberliegende zweite Ende (35) als freies Ende an der Anlageringfläche (32) dicht anliegt.

7. Gasturbine nach einem der Ansprüche 1 bis 6,
**dadurch gekennzeichnet,**
**dass** die Federwirkung des Dichtmittels zum Inneren des Innengehäuses (37) gerichtet ist.

8. Gasturbine nach einem der Ansprüche 1, 2 oder 4 bis 7, sofern nicht abhängig von Anspruch 3,
**dadurch gekennzeichnet,**
**dass** der in Strömungsrichtung gesehen vordere Ring (25) den radial außen liegenden und der hintere Ring (26) den innen liegenden Kragen (27, 28) bildet, so dass der Ringspalt (23) radial gesehen in Strömungsrichtung des Arbeitsfluid (20) verläuft.

## Claims

1. Gas turbine (1) with a rotationally fixed inner casing (37) which is arranged concentrically with respect to the rotor (3) and through which a working medium flows, and which is formed from at least two rings (25, 26) lined up with one another, in each case so as to leave an annular gap (23) between two directly adjacent rings (25, 26) which have in each case, in the region of the annular gap (23), a collar (27, 28) extending in the flow direction of the working medium (20), which collars partially overlap one another, an annular sealing means being provided for sealing off the annular gap (23), **characterized in that** the sealing means is designed as a spring element (24) with a first end (34), with a second end (35) and with a spring region lying between them, and **in that** the first end (34) is secured in one of the two rings (26) in a circumferential groove (31) open toward the annular gap (23), and **in that** the collar (27) arranged on the other of the two rings (25) has, for the second end (35) of the spring element (24), an annular bearing surface (32) against which the spring element (24) bears, prestressed, so as to seal off the annular gap (23), while, in order to generate the prestress, the spring region is supported on an annular supporting surface (33) which is provided on the collar (28) of the one ring (26) and which faces the annular bearing surface (40).

2. Gas turbine according to claim 1, **characterized in that** the inner casing (37) is designed to diverge conically toward the rotor (3) in the flow direction.

3. Gas turbine according to claim 1 or 2, **characterized in that** the front ring (25), as seen in the flow direction, has the radially inner collar (27) and the rear ring (26) has the outer collar (28), so that, as seen radially, the annular gap (23) runs counter to the flow direction of the working fluid (20) .

4. Gas turbine according to claim 1, 2 or 3, **characterized in that** the first end (34) is sealingly connected as the fixed end of the spring element (24) to the circumferential groove (31) by welding or soldering.

5. Gas turbine according to one of claims 1 to 4, **characterized in that** the annular bearing surface (32) is provided on that side of the radially inner collar (27) which faces away from the working medium.

6. Gas turbine according to claim 5, **characterized in that** the spring element (24), of S-shaped cross section, bears sealingly with, as free end, its second end (35) lying opposite the first end (34) against the annular bearing surface (32).

7. Gas turbine according to one of claims 1 to 6, **characterized in that** the spring action of the sealing means is directed toward the inside of the inner casing (37).

8. Gas turbine according to one of claims 1, 2 or 4 to 7, provided that it is not dependent on claim 3, **characterized in that** the front ring (25) as seen in the flow direction, forms the radially outer collar (27) and the rear ring (26) forms the inner collar (28), so that, as seen radially, the annular gap (23) runs in the flow direction of the working fluid (20).

## Revendications

1. Turbine (1) à gaz comprenant un carter (37) intérieur, qui est disposé sans pouvoir tourner concentriquement au rotor (3) et dans lequel passe un fluide de travail,
qui est formé d'au moins deux anneaux (25, 26) rangés l'un à côté de l'autre respectivement en laissant un intervalle (23) annulaire entre deux anneaux (25, 26) directement voisins, lesquels, ont respectivement, dans la partie de l'intervalle (23) annulaire, des collets (27, 28) qui s'étend dans le sens du courant du fluide (20) de travail, qui se chevauchent l'un l'autre en partie,
dans laquelle il est prévu, pour rendre étanche l'intervalle (23) annulaire, un moyen d'étanchéité annulaire,
**caractérisée**
**en ce que** le moyen d'étanchéité est constitué sous la forme d'un élément (24) élastique ayant une première extrémité (34), une deuxième extrémité (35) et une partie élastique entre elles et
**en ce que** la première extrémité (34) est fixée dans l'un des deux anneaux (26) dans une rainure (31) périphérique ouverte en direction de l'intervalle (23) annulaire et
**en ce que** l'autre collet (27) disposé sur l'autre des deux anneaux (25) a une surface (32) annulaire d'appui de la deuxième extrémité (35) de l'élément (24) élastique, sur laquelle l'élément (24) élastique s'applique, avec mise sous tension préalable, en rendant étanche l'espace (23) annulaire,
dans laquelle, pour la production de la mise sous tension préalable la partie élastique s'appuie sur une surface (33) annulaire d'appui qui est prévue sur le collet (28) de l'un des anneaux (26) et qui est tournée vers la surface (40) annulaire d'appui.

2. Turbine (1) à gaz suivant la revendication 1,
**caractérisée en ce que** le carter (37) intérieur diverge coniquement par rapport au rotor (3) dans le sens du courant.

3. Turbine (1) à gaz suivant la revendication 1 ou 2,
**caractérisée**
**en ce que** l'anneau (25) avant, vu dans le sens du courant, a le collet (27) intérieur radialement et l'anneau (26) arrière a le collet (28) extérieur de sorte que l'intervalle (23) annulaire s'étend, considéré radialement, dans le sens contraire au sens du courant du fluide (20) de travail.

4. Turbine (1) à gaz suivant la revendication 1, 2 ou 3,
**caractérisée**
**en ce que** la première extrémité (34) est reliée, en tant qu'extrémité fixe de l'élément (24) élastique, de manière étanche par soudage ou par brasage à la rainure (31) périphérique.

5. Turbine (1) à gaz suivant la revendication 1 à 4,
**caractérisée**
**en ce que** la surface (32) annulaire d'appui est prévue du côté du collet (27) intérieur radialement éloigné du fluide de travail.

6. Turbine (1) à gaz suivant la revendication 5,
**caractérisée**
**en ce que** l'élément (24) élastique de section transversale en forme de S s'applique avec étanchéité sur la surface (32) annulaire d'appui par sa deuxième extrémité (35) en tant qu'extrémité libre, qui est opposée à la première extrémité (34).

7. Turbine (1) à gaz suivant la revendication 1 à 6,
**caractérisée**
**en ce que** l'effet élastique du moyen d'étanchéité est dirigé vers l'intérieur du carter (37) intérieur.

8. Turbine (1) à gaz suivant la revendication 1, 2 ou 4 à 7, dans la mesure où elle ne dépend pas de la revendication 3,
**caractérisée**
**en ce que** l'anneau (25) avant, vu dans le sens du courant, forme le collet (27) extérieur radialement et l'anneau (26) arrière le collet (28) intérieur de sorte que l'intervalle (23) annulaire s'étend, considéré radialement, dans le sens du courant du fluide (20) de travail.
